# EUROPEAN PATENT APPLICATION

(11) **EP 4 675 478 A1**
(43) Date of publication of application: **07.01.2026**
(21) Application number: 25187544.9
(22) Date of filing: 04.07.2025
(51) Int. Cl.: G06F 21/57, G06N 3/02, G06N 20/00, H04L 9/40

(54) **AUTOMATED METHOD FOR VIRTUAL TECHNICAL ASSISTANCE IN THE CORRECTION OF COMPUTER VULNERABILITIES THROUGH COMBINED USAGE OF SOFTWARE AUTOMATION AND ARTIFICIAL INTELLIGENCE TECHNICS**

(30) Priority: 04.07.2024 IT 202400015421
(71) Applicant: Cylock S.r.l., 00142 Roma (IT)
(72) Inventor: Padovan, Diego, 001400142 Roma (IT)
(74) Representative: Pace Napoleone, Maria

(57) **Abstract**

The invention relates to an automatic method for technical assistance in the correction of vulnerabilities of a computer system, where the aforementioned method comprises at least the following steps:
a) receiving information relative to computer system vulnerabilities by text, voice, file input or through data exchange;
b) launching tools based on artificial intelligence algorithms and machine learning to understand the information and requests entered relative to vulnerabilities;
c) performing parsing and text mining of the information received and process it through intelligent data matching with information relative to the computer vulnerabilities present in a database or through interaction with external online vulnerability databases;
d) in case of unsatisfactory results, starting an extended online search by web scraping using deep learning algorithms and unsupervised machine learning;
e) updating an internal vulnerability database with the additional information found; and
f) generating a vulnerability report accompanied by relative remediation.

## Description

### FIELD OF THE INVENTION

The present invention relates to an automatic method for virtual technical assistance in the correction of computer vulnerabilities through the combined use of software automation and artificial intelligence techniques.

### PRIOR ART

As is known, one of the key elements for defending against hacker attacks is the timely implementation of remedies to computer vulnerabilities identified through methods and techniques for the analysis and security testing of computer systems.

To date, these remedies are generally provided through individual reports or that make up more complex remedy plans, both in automated and manual form and which can then be implemented manually or by means of tools that make it possible to automate part of the remedy activities in the different IT environments currently in use.

However, there are numerous situations in which, due to the complexity and heterogeneity of the systems, the implementation of the remedy plans is not fully automated since, for example, it does not cover settings or static code and requires the intervention of a human operator, specialized in the operational development environment to which the remedy plan refers.

In addition, computer vulnerabilities increase day by day as they concern characteristics, mechanisms and processes of computer systems and the hardware and software elements that compose them.

A vastness and variety that follows the development of technology but also comprises all the possible combinations between these elements, today represented by traditional IT systems, OT systems, IoT and integrations with the most modern artificial intelligence software.

Therefore, it seems unlikely that the knowledge that can be acquired only by human operators operating in the IT sector and by those responsible for the remediation of computer vulnerabilities is today sufficient to cope with such a complex scenario.

It follows that the technician responsible for the remediation and fixing of vulnerabilities is involved on a daily basis in onerous and detailed searches for information relative to the computer vulnerabilities and relative remedies, taking into account the peculiarities of the computer system to which they must be applied.

It follows that an accurate and effective remedy implementation plan can take months of work, leaving the computer system at risk of a hacker attack in the meantime.

There are currently several tools to carry out vulnerability assessment tools (VA) and to perform penetration testing of computer systems (PT), which base their activities, as well as their outputs, on different international methodologies or frameworks, among which the best known are OWASP, OSSTMM and NIST.

As a rule, VA and PT tools make it possible to provide in output, in structured and non-structured format, the information relative to the identified vulnerabilities and more generally relative to the IT security problems of the tested IT assets.

These reports are structured and organized so that they can certify the testing activity and provide different levels of information about the technical vulnerabilities identified so that a user can start a remediation activity or build a remediation plan.

It must be said, in fact, that the vulnerability assessment and penetration testing reports do not contain a remediation plan for the remediation activities, but rather suggestions for fixing the vulnerabilities identified and which are categorized according to their level of risk.

Defining a remediation plan is a broad and complex activity, usually performed by a cyber security specialist, that requires additional information, usually held by the owners or managers of the tested assets, to be properly planned and executed. Fixing remedies contained in a remedy plan is an equally time-consuming activity and is usually performed by an IT specialist or technician who operates manually or is assisted by semi-automated programs, however requiring different interactions with whoever produced the VA/PT report and/or the remedy plan.

Today, the vulnerability remediation process following VA and PT can be divided into four main steps.

The first is patch search and identification, where IT professionals use vulnerability management software to identify available patches for vulnerabilities identified by VA or PT.

Vulnerability management software can provide information about the availability of patches, the severity of the vulnerabilities, and the instructions for applying patches.

The second step is the application of patches, whereby IT professionals apply the patches to the affected systems and applications.

The patch application process can vary depending on the type of system or application.

In some cases, patching may be performed automatically, while in other cases manual intervention may be required.

The third step involves verifying the correct application of the patches, for which IT professionals verify that the patches have been applied correctly and that they have resolved the vulnerabilities.

Verification may be performed using vulnerability management software or other testing tools.

The fourth and final step provides for IT professionals to generate one or more reports documenting the vulnerability remediation process.

These reports may include information on the vulnerabilities identified, the patches applied, any critical issues found and the actions taken to mitigate the risks.

It is also known that the vulnerability correction process must be carried out in a systematic and continuous manner, providing a high number of resources (primarily temporal) for this activity to be effective.

In the state of the art, it is known that some companies use large language model (LLM) or reinforcement learning (RL) models to perform the activity of detection and correction of vulnerabilities, but in a specific area, namely the analysis of the source code of services and applications, better known as so-called static analysis or SAST (Static Application Security Testing).

On the contrary, it is not known to use artificial intelligence-based automation tools for fixing activities in the DAST or Dynamic Application Security Testing field, which are mostly conducted manually.

Furthermore, for DAST-type analyses, today, there is no "assisted" automation in vulnerability fixing processes.

This means that there are no tools for the fixing activity driven by automation processes based on artificial intelligence or that allow the IT technician to be able to dialogue with the automated tool, in real time, in order to receive additional and detailed information or provide information so that the vulnerability remediation activity can be modulated according to the vulnerabilities.

As a result, the software can produce more detailed and scalable instructions and patches on a case-by-case basis. In this way, the limits of the human knowledge of an individual operator are extended in real time and as needed, allowing the latter to initiate remediation actions in step with technological evolution.

Therefore, the level of overall knowledge about computer vulnerabilities and fixing alternatives becomes significantly higher and immediately available to any remediation worker, who can thus count on obtaining more effective, accurate and timely results.

It is therefore an object of the present invention to improve the speed and accuracy of current techniques for implementing remedies for the computer vulnerabilities.

Not least, the object of the invention is to obtain the above-mentioned results in a practical and economical manner.

### SUMMARY OF THE INVENTION

The above purposes are achieved by means of an automatic method for technical assistance in the correction of vulnerabilities of a computer system, where the aforementioned method is feasible by means of at least one computer, where the aforementioned computer is provided with input and memory devices, cooperating with an operating system installed in the aforementioned computer, the aforementioned computer being able to connect to other computers and/or the Internet and to databases external or internal to the computer's memory, and being equipped with software means dedicated to the execution of the method itself, where the aforementioned method comprises at least the following steps:
a) receiving information relative to computer system vulnerabilities by text, voice, file input or through data exchange;
b) launching tools based on artificial intelligence algorithms and machine learning to understand the information and requests entered relative to vulnerabilities;
c) performing parsing and text mining of the information received and process it through intelligent data matching with information relative to the computer vulnerabilities present in an internal vulnerability database or through interaction with external online vulnerability databases;
d) in case of unsatisfactory results, starting an extended online search by web scraping using deep learning algorithms and unsupervised machine learning;
e) updating the internal vulnerability database with the additional information found; and
f) generating a vulnerability report accompanied by relative remediation.

An advantage of the invention is that thanks to an automation model for virtual technical assistance in the correction of computer vulnerabilities through the combined use of software automation and artificial intelligence techniques, including machine learning (ML) models based on reinforcement learning (RL) and the large language model (LLM), it is possible to introduce an innovation in the technique.

This represents a breakthrough in the vulnerability patching system since it makes it possible to manage exceptions and specificities deriving from the heterogeneity of computer systems and resources through interaction with the user.

Virtual technical assistance software for the correction of computer vulnerabilities through the combined use of software automation and artificial intelligence techniques overcomes this limit, improving the speed and accuracy of current techniques for the implementation of remedies to computer vulnerabilities.

The AI-based virtual technical remediation assistant is able to understand any security analysis, vulnerability assessment and penetration testing reports and provide answers to questions about computer vulnerabilities.

The software is also able to assist the involved technicians with detailed and specific instructions for the implementation of the remedies relative to these vulnerabilities, taking into account both their severity and relative risk exposure.

In this way, the AI-based virtual technical remedy assistant is able to reduce the execution time of remedy implementation activities by significantly increasing the accuracy and effectiveness of these activities compared to a traditional approach thanks to the use of generative AI trained in cyber security.

Further features of the invention can be inferred from the dependent claims.

### BRIEF DESCRIPTION OF THE DRAWINGS

Further features and advantages of the invention will be apparent from reading the following disclosure provided by way of non-limiting example, with the help of the figures illustrated in the attached tables, in which:

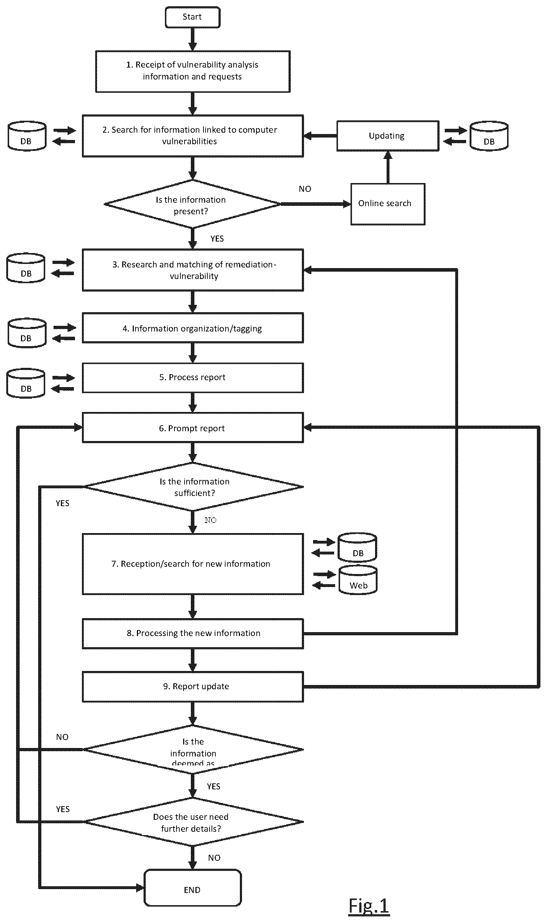

- Figure 1 schematically illustrates how the method works according to one embodiment of the invention.

### DETAILED DESCRIPTION OF THE FIGURES

The invention will now be described with particular reference to the attached figures, and considering the following premise.

The virtual technical assistance software for the correction of computer vulnerabilities through the combined use of software automation and artificial intelligence techniques according to an embodiment of the invention is a computer-implemented invention, whose technical effect deriving from the execution of the computer program goes beyond the normal interaction between the program and the computer.

This additional technical effect of the action of the virtual technical assistance software to the correction of computer vulnerabilities can be found outside the PC through a process and equipment control system, or within the PC itself (for example, in the management of data in the memory of the computer or in the management of hardware resources).

It is a software that processes the technical data received or extrapolated from any VA or PT test by direct communication, through other apparatus or electronic means, which contains said information, with particular reference to the field of computer security (cyber security), understood as that set of means, technologies and procedures aimed at the protection of computer systems in terms of availability, confidentiality and integrity of computer assets or assets.

The invention implemented by computer in question, therefore, consists of a specific virtual technical assistance software for the correction of computer vulnerabilities of computer assets tested through the use of artificial intelligence and machine learning techniques that adapts to the complexity, heterogeneity and continuous evolution of products and services as well as VA and PT methods and techniques.

Since the software is able to understand the output of said tests, the technical effect deriving from its execution consists of a tool based on the engineering of the prompt capable of interactively assisting the IT technician in correcting computer vulnerabilities in real time.

This software is based on the method described below, which is the result of the author's intellectual creation, and is coincident with the program expressed in its source code, its output, as well as interfaces with the user or other software such as a set of graphic images, messages and sounds that guide the user to intervene on the computer commands.

The invention makes it possible to innovate the state of the art thanks to its ability to overcome the current limits present in the programs for remedying, fixing and patching computer vulnerabilities on the market today, since today said programs are characterized by:
a) inability to modulate the remediation activity to the vulnerabilities identified automatically and autonomously, not allowing to enrich the decision-making process through additional information, including qualitative information, regarding the environments to which they apply;
b) inability to provide instructions with one or more alternatives in the event that the user does not have the resources or is unable to apply the first remedies provided has specific needs that he would like to be taken into consideration before the instructions were provided to him;
c) inability to interact with the user and therefore to provide additional information or insights in real time on the suggested results or more generally on the activities to be performed in the event that the user does not have the skills to immediately understand the first results;
d) inability to receive any VA and PT reports as input, or more generally unstructured vulnerabilities or vulnerabilities deriving from third party tools and therefore to carry out their remediation assistance activities regardless of the source, always being linked to a specific product.

The possibility of interaction with the IT technician and the ability to understand and process additional information, unstructured or from third party sources, is essential to increase the effectiveness and efficiency of the activity of remedying the vulnerability of IT systems as a whole.

As mentioned above, this activity today is not fully automated but limited to specific areas, in particular in SAST testing, and completed without the possibility of enriching the information available or interacting with the software that provides such services.

The lack of understanding of the peculiarities of the computer system to which the remedies would be applied before they are included in the vulnerability fixing report and the impossibility of providing these peculiarities even at a hypothetical step after receiving the report, limits the possibility of receiving personalized remedies, entrusting this activity to specialized technical personnel through a specific manual intervention.

The operation of the invention implemented by computer and the technical effect deriving from the execution of the computer program (software) is based on the following method.

In general, the automated assistance software for the remediation of computer vulnerabilities through a pre-trained generative model based on artificial intelligence and machine learning according to an embodiment of the present invention, receives a set of computer vulnerabilities (hardware and/or software) as input and automatically processes a set of instructions and remedies aimed at overcoming the vulnerabilities received as input with the possibility of subsequently adapting and modulating said sets of vulnerabilities according to the interaction with the user and the additional information received from the latter as input, as well as the possibility of providing further information and assistance through a request and response mechanism through prompt engineering.

The method for operating the software is described in the flow chart in Figure 1.

The flowchart (Data Flow Diagram or DFD) represents the key steps for the execution of the innovative method introduced by the computer vulnerability research and testing software through the combined use of artificial intelligence and machine learning techniques. The flowchart (DFD) has been developed according to a graphical representation of the operations to be performed by means of individual steps displayed by means of standard symbols characterized by a sequential reading.

The notation used includes five types of blocks, namely an initial block, an I/O block, a decision or test block, a processing block and a final block.

That being said, the process described by the DFD provides for several sequential and recursive steps.

Step 1 - Receipt of information by text, voice, file input or through the exchange of data through user or software, containing the vulnerabilities of a computer system and reception of analysis requests regarding these vulnerabilities.

In this step, special tools based on artificial intelligence algorithms and machine learning are launched so that the software is able to understand the information and requests entered relative to the computer vulnerabilities of any computer system under analysis, of all resources, applications, and their versions, as well as complementary information such as subdomains, folders and files that may be useful in the subsequent steps and that belong to said system.

Step 2 - Parsing and text mining of the information received in the previous step and their processing by intelligent data matching with the information relative to computer vulnerabilities present in the database or by software interaction with online vulnerability databases to combine the information received with all possible remediation activities and more generally relative to the fixing of vulnerabilities.

Step 3 - If the processing of the information in the previous step did not produce satisfactory results, then the information produced is below a certain information threshold considered minimum by the software or the user, at least one further and more extensive online search step is initiated.

This research is done by web scraping with deep learning and unsupervised machine learning algorithms.

In particular, this occurs by exploiting the use of such models in combination with models of convolutional neural networks (CNN) and recurrent neural networks (RNN), allowing the software to proceed with the search and extraction of new data and information from different sources, including complex websites and unstructured blogs.

If such activity produces at least one additional piece of information, the database is updated accordingly, and the software returns to Step 2, vice versa moves to Step 5 indicating to the user or software the absence of satisfactory results and providing the possibility to enter new information to modify the search.

In the event that Step 2 has produced satisfactory results, it is moved on to the next Step 3.

Step 3 - Once the previous steps have been completed, the software, if it has carried out new searches, performs a further parsing of the information, then proceeds with the intelligent data matching activity so that the subsequent processing provides a set or clustering of data structured and organized in pairs or n-plets in which each information is linked to at least one indication of remediation.

Step 4 - The software, starting from the data clustering, proceeds with its further processing by means of automated multi-source tagging of the information, allowing the possibility of manual intervention by the operator.

Step 5 - Having acquired the outputs of the previous steps, the software uses prompt engineering and one or more LLM algorithms with multilingual capabilities to generate a report divided into a summary and a detailed part, in which the vulnerabilities and their remediation are reported.

Database is updated at each report generation and by techniques that use existing report embeddings and vector databases to improve LLM output.

Step 6 - The report is produced and provided to the user who will be able to view and export it in various formats.

Through prompt engineering, the software allows the user to request information about individual words or phrases to be able to ask questions or a thematic in-depth study, through natural language or the aid of electronic support.

In addition, the software is able to receive additional information and in different formats, so that the user is able to interact by prompt with the software itself, enriching the interaction with the software with additional and peculiar details relative to its analysis or its computer system and also request further processing of the report.

Step 7 - Faced with the new information entered and/or the requests made by the user, the software performs, through a machine learning algorithm, a search on its DB for the information useful in order to be able to provide a comprehensive response to the user or possibly searching online for the missing information, repeating Steps 1-3.

Step 8 - Following the entry of the new information, the software restarts the analysis cycle by repeating Steps 3-7.

Step 9 - Once the previous cycle has ended, or at the user's request, by using prompt engineering, the software updates the report.

The software automatically returns to Step 6, in case the user still needs to interact with the software, or allows you to end the session by downloading the report in the format chosen by the user.

The report, saved in DB, can be consulted at a later time and the software will proceed with updating the report, then positioning itself in Step 6.

The advantageous effects introduced by the present invention comprise, but are not limited to:
- the introduction of a process of analysis of computer vulnerabilities which consists in understanding the computer peculiarities of the computer system to which they refer and consequent optimization of the instructions and remedies for overcoming them, therefore able to adapt automatically, thanks to artificial intelligence and machine learning to the specificities of each computer system subject to the vulnerabilities;
- the elimination of the need for human intervention in the processing of the computer vulnerability remediation reports, with a direct impact on the management of the full-time equivalent (FTE) linked to specialized technical personnel by the implementing organization;
- the significant increase in the performance of the remediation plans and the accuracy of the instructions compared to the current automated analysis tools available on the market, being able to independently manage, through an assisted interaction, the specificities of the IT resources to which the vulnerabilities refer;
- the reduction of the need for manual analysis by technicians specialised in ethical hacking or cyber security for the collection, processing and drafting of remedies related to the vulnerabilities they have identified, which represents a fundamental advantage especially where technical and economic resources are limited (e.g. SMEs)
- the reduction of the need for the use of manual activities and searches by IT technicians specialised in the remediation of computer vulnerabilities thanks to the possibility of interacting with the system in real time to ask for further explanations or adapt the proposed remedies and instructions by providing feedback relative to the IT system they manage, thus representing a huge advantage for each IT system, especially where technical and economic resources are limited (e.g. SMEs)

The invention as described can be modified or improved for contingent or particular reasons, without departing from the scope of the invention.

## Claims

1. Automatic method for technical assistance in the correction of vulnerabilities of a computer system, where the aforementioned method is feasible by means of at least one computer, where the aforementioned computer is provided with input and memory devices, cooperating with an operating system installed in the aforementioned computer, the aforementioned computer being able to connect to other computers and/or the Internet and to databases external or internal to the computer's memory, and being equipped with software means dedicated to the execution of the method itself, where the aforementioned method comprises at least the following steps:
a) receiving information relative to computer system vulnerabilities by text, voice, file input or through data exchange;
b) launching tools based on artificial intelligence algorithms and machine learning to understand the information and requests entered relative to vulnerabilities;
c) performing parsing and text mining of the information received and process it through intelligent data matching with information relative to the computer vulnerabilities present in an internal vulnerability database or through interaction with external online vulnerability databases;
d) in case of unsatisfactory results, starting an extended online search by web scraping using deep learning algorithms and unsupervised machine learning;
e) updating the internal vulnerability database with the additional information found; and
f) generating a vulnerability report accompanied by relative remediation.

2. Method as in Claim 1, wherein the online search step comprises using convolutional neural network (CNN) and recurrent neural network (RNN) models to search and extract new data from web sources.

3. Method as in Claim 1, further comprising the step of generating a report divided into a summary and a detailed part by prompt engineering and Large Language Model (LLM) algorithms with multilingual capabilities.

4. Method as in Claim 1, wherein the database is updated using techniques that employ embeddings and vector databases to improve the output of the Large Language Model (LLM).

5. Method as in Claim 1, wherein a further parsing of the information is performed and an intelligent data matching activity is performed to provide a set or clustering of data organized in pairs or n-plet, where each information is linked to at least one indication of remediation.

6. Method as in Claim 5, wherein the processing of the data clustering is by automated multi-source tagging, allowing manual interventions by the operator to further refine the results.

7. Method as in Claim 1 wherein prompt engineering and Large Language Model (LLM) algorithms with multilingual capabilities are used to generate a summary and a detailed report listing the identified vulnerabilities and their remediation.

8. Method as in Claim 1, wherein the updating of the internal vulnerability database is carried out at each generation of the report by using techniques that employ embeddings and vector databases to improve the output of the Large Language Model (LLM).

9. Method as in the preceding claims wherein the generated report is provided to the user with the possibility to view and export it in various formats, and the software allows the user to interact via prompts for detailed information requests or thematic insights.

10. Method as in Claim 1, wherein the computer, upon receiving new information or requests from the user, performs a search in its internal or online vulnerability database to provide comprehensive answers, repeating the necessary analysis steps.

11. Method as in Claim 10, wherein following the input of new information, the computer restarts the analysis cycle to further refine the results and update the report and upon the user's request, updates the existing report to reflect new analysis or additional information provided by the user.
